# EUROPEAN PATENT SPECIFICATION

(11) **EP 4 243 568 B1**
(45) Date of publication and mention of the grant of the patent: **11.09.2024**
(21) Application number: 22161052.0
(22) Date of filing: 09.03.2022
(51) Int. Cl.: H05B 3/50, B60H 1/22, F24H 3/04, F24H 9/1863

(54) **ELECTRIC HEATING DEVICE**
ELEKTRISCHE HEIZVORRICHTUNG
DISPOSITIF DE CHAUFFAGE ÉLECTRIQUE

(43) Date of publication of application: 13.09.2023
(73) Proprietor: MAHLE International GmbH, 70376 Stuttgart (DE)
(72) Inventor: EDEL, Nicolas, 68360 Soultz-Haut-Rhin (FR); Hildenbrand, Mathieu, 68000 Colmar (DE); MAGNIER, Gilles, 90110 Rougemont-le-Chateau (FR); Salmon, Judie, 67200 Strasbourg (FR)
(74) Representative: BRP Renaud & Partner mbB Rechtsanwälte Patentanwälte Steuerberater

(56) References cited:
- EP-A1- 3 493 650
- KR-B1- 101 115 952
- US-A1- 2004 112 884

## Description

The present invention relates to an electrical heating device, in particular for a motor vehicle, which has at least two electrically operated heating modules spaced apart from one another and power electronics for supplying the heating modules. The invention further relates to a motor vehicle having such a heating device and to method for manufacturing such a heating device.

An electric heating device can be used to heat a fluid. Such an electrical heating device usually has a volume through which the fluid to be heated flows, which is also referred to as the heating volume in the following. Two or more heating modules are usually arranged in the heating volume. The respective heating module has at least one electrical heating element, for example a PTC element. When electrically supplied, the heating element generates heat and thus heats the fluid flowing through the heating volume. Such heating modules generally have an electrically conductive outer shell that encloses the at least one heating element. For electrical supply, the heater further usually comprises power electronics. The power electronics are usually accommodated in a volume that is fluidically separate from the heating volume, which is also referred to as the control volume in the following. Usually, the power electronics is accommodated in a housing which delimits the control volume and the heating volume. Such heating devices are known, for example, from EP 2 685 784 A1 and FR 3 075 552 A1.

Such a heating device is further known from EP 3 493 650 A1. The housing for accommodating the power electronics, hereinafter also referred to as the control housing, has a first housing part which delimits the heating volume. In a bottom of the first housing part, an opening is provided for the respective heating module, through which the heating module is inserted into the control volume. Further, the respective opening is sealed to fluidically separate the control volume from the heating volume. A conductor element is arranged in the control volume, which electrically connects the outer shells of the heating modules to one another so that they are at the same electrical potential.

EP 3 772 867 A1 discloses a heating device which comprises a conductor element is arranged in the control volume, which electrically connects the outer shells of the heating modules to one another so that they are at the same electrical potential. The conductor element for the respective heating module comprises a corresponding opening wherein contact tongues of the conductor element rest against the outer shells. The contact tongues project from openings of the conductor element, through which the heating modules are led.

US 2004/112884 A1 discloses an electric heating device according to the preamble of claim 1.

The present invention is concerned with the problem of providing improved or at least other embodiments for an electric heating device of the type mentioned above and for a motor vehicle with such a heating device, which address disadvantages of solutions in the prior art. The present invention is in particular concerned with the problem of providing improved or at least other embodiments for the electric heating device and the motor vehicle which are characterized by increased operational safety and/or reduced operational malfunction and/or simplified manufacture of the heating device.

This problem is solved according to the invention by the objects of the independent claims. Advantageous embodiments are the subject of the dependent claims.

The present invention is based on the general to provide a conductor arrangement in an electric heating device for electrically connecting outer shells of heating modules to a housing for the reception of power electronics, such that the outer shells and the housing are at the same electrical potential, wherein the conductor arrangement comprises a first part which electrically contacts the outer shells to the housing and a second part which covers the first part and is connected to the first part by means of at least one form closure. Therefore, the second part, also referred to as cover in the following, protects the first part, also referred to as intermediate part in the following. As a result, damages of the intermediate part as well as the electric connection of the intermediate part with the outer shells and the housing are prevented or at least reduced. Hence, the outer shells as well as the housing are connected to the same electrical potential, i.e. are equipotential, with increased stability. Therefore, the operational safety of the electric heating device is increased. In addition, the cover can be used to mechanically bias the intermediate part against the housing and/or the outer shells. Thus, the electric connection of the intermediate part with the housing and/or the outer shells is increased and stabilized. Therefore, the operational safety of the electric heating device in further increased. The increased and improved electric contact further leads to a reduced disturbance in the operation of the electric heating device. In addition, an examination of the electrical conditions of one of the equipotentially connected components, in particular of the housing, can thus detect undesirable electrical currents and/or leakages of the electric heating device in a simple and reliable manner. This results in improved operational reliability. Moreover, the intermediate part and the cover can be preassembled and, as a preassembled unit, be mounted on the outer shells and the housing. This results in a simplified manufacture of the electric heating device.

In accordance with the idea of the invention, the electrical heating device, also simply denoted heating device in the following, has a volume through which a flow path of a fluid leads, whereby the fluid is heated during operation. This volume is hereinafter also referred to as the heating volume. In the heating volume, the heating device has at least two heating modules which are spaced apart from one another in a direction also referred to as transverse direction hereinafter. In particular, the heating modules are arranged in the flow path. The respective heating module extends longitudinally in a direction that is also referred to hereinafter as the longitudinal direction. The respective heating module has at least one electrical heating element. The respective electrical heating element is such that it generates heat when electrically supplied. Thus, the fluid is heated by the heating modules during operation. The respective heating module has the electrically conductive outer shell. Advantageously, the outer shell is formed as a flat tube. The heating device further comprises the housing which is electrically conductive. The housing is hereinafter also referred to as the control housing. The housing delimits a volume. The volume delimited by the housing is also referred to as control volume hereinafter. In the control volume, the heating device has power electronics. With the power electronics, the heating modules, in particular the heating elements, are electrically supplied during operation. The housing has a bottom which delimits the heating volume. The bottom of the housing has an opening for the respective heating module. These openings of the bottom are hereinafter also referred to as passage openings. The respective heating module penetrates into the control volume in the longitudinal direction through the corresponding passage opening. The respective heating module is inserted into the control volume in particular in the longitudinal direction through the corresponding passage opening. In the control volume, the heating modules are electrically connected to the power electronics, so that the heating elements are electrically supplied with the power electronics during operation. The heating device further has the conductor arrangement which electrically connects the respective outer shell to the housing and the outer shells to each other. The conductor arrangement comprises the intermediate part which rests against the bottom and is electrically connected to the bottom and to the outer shells. The intermediate part, for each outer shell, comprises a corresponding opening, through which the corresponding outer shell is led in longitudinal direction. These opening are also referred to as arrangement openings in the following. The conductor arrangement, on the side of the intermediate part averted form the bottom, further comprises the cover which covers the intermediate part. The intermediate part comprises at least one bend which projects in the direction of the cover and is also referred to as closure bend in the following. The cover, for each closure bend, comprises a corresponding opening also referred to as cover opening in the following. Each closure bend is led through the corresponding cover opening and engages with the cover to form a form closure.

The cover is, as mentioned, arranged on the side of the intermediate part averted form the bottom. Thus, the intermediate part is arranged preferably entirely arranged between the bottom and the cover and covered by the cover.

The conductor arrangement is advantageously mechanically fixed, preferably fastened, to the bottom. In preferred embodiments, the intermediate part and the cover are fastened to the bottom. Advantageously, the conductor arrangement, in particular the intermediate part and the cover, are detachably fastened to the bottom. Advantageously, the mechanical connection also provides an electrical connection

The respective outer shell preferably encloses the at least one heating element of the associated heating module.

The transverse direction preferably runs transverse to the longitudinal direction.

Each heating module has preferably a front face in longitudinal direction which is arranged in the control volume.

Preferably, each heating module comprises at least one electric plug projecting from the front face and electrically connected to the power electronics. Each electric plug is preferably electrically separated from the outer shells and thus from the housing.

Each outer shell might have two walls opposite in the transverse direction, which are also referred to hereinafter as outer walls. Each outer shell might have two walls opposite in a direction transverse to the longitudinal direction and transverse to the transverse direction which are also referred to as side walls in the following. The side walls of the outer shell might connect the outer walls to each other and vice versa.

The direction transverse to the longitudinal direction and transverse to the transverse direction is also referred to as vertical direction in the following.

The bottom of the housing, in preferred embodiments, delimits the heating volume. That is, the bottom preferably separates the heating volume from the control volume.

The control housing, in general, can be a one-part housing.

Preferably the control housing comprises an electrically conductive first housing part and an electrically conductive second housing part electrically connected to one another and delimiting the control volume. The housing parts are preferably detachably connected to each other. This simplifies the manufacture of the heating device and further allows access to the control volume if needed.

The first housing part might comprise the bottom. Thus the intermediate part is electrically and mechanically connected to the first housing part.

Preferably, the common potential corresponds to an electrical ground. For this purpose, at least one of the equipotentially connected components, i.e. the housing, in particular at least of the housing parts, the conductor arrangement or at least one of the outer shells is electrically connected to an electrical ground, for example the electrical ground of an associated application. Particularly preferably, only one of said components is electrically connected to the electrical ground.

Advantageously, one of the housing parts is electrically connected to the electrical ground.

In the respective passage opening, a sealing arrangement fluidically sealing the control volume from the heating volume can be arranged. The sealing arrangement is preferably insulating. The sealing arrangement comprises at least one sealing body.

Conveniently, the conductor arrangement is separate from the sealing arrangement.

In preferred embodiments at least one closure bend, preferably each closure bend, is designed in the manner of a spring clip. For this, the closure bend preferably comprises a lower section on the side facing the bottom and an upper section connected to the lower section and running inclined to the lower section towards the bottom. The closure bend and thus the spring clip and the corresponding cover opening are further designed such that, when the cover and the intermediate part are moved toward each other, the closure bend is led through the cover opening and latches into the cover to form a form closure. This simplified the assembly of the intermediate part to the cover and thus the manufacture of the heating device. Furthermore, an increased stability of the mechanical connection of the intermediate part with the cover is achieved.

Preferably, the closure bend and the corresponding cover opening are designed such that, when the cover and the intermediate part are moved toward each other in longitudinal direction, the closure bend is led through the cover opening, in particular latches into the cover, to form a form closure. This simplifies the assembly of the intermediate part to the cover and thus the manufacture of the heating device.

Advantageously, the cover, on the side facing the intermediate part, comprises at least one projecting bump which presses the intermediate part towards the bottom. This leads to an increased and/or more stabilized mechanical and electric contact of the intermediate part with the bottom. Thus, the operational safety of the heating device in further increased.

Advantageously, the conductor arrangement is fastened to the bottom by means of at least one screw. This leads to a simplified manufacture of the heating device and a stable mechanical and electric connection of the conductor arrangement to the bottom.

Preferably, the intermediate part and the cover comprise corresponding openings for common screws. The openings are also referred to as fastening openings in the following. Thus at least one common screw fastens the intermediate part and the cover to the bottom. The result is a simplified manufacture of the heating device.

In preferred embodiments, a common screw is led through the corresponding fastening openings and screwed into the bottom, such that a screw head of the screw rests on the cover and presses the cover and the intermediate part towards the bottom. This results in an and/or more stabilized mechanical and electric contact of the intermediate part with the bottom. Thus, the operational safety of the heating device in further increased.

In advantageous embodiments, the bottom, for at least one of the at least one screws, comprises a corresponding collar which projects towards the intermediate part and in which the screw is arranged. The intermediate part comprises a corresponding opening for the collar, thorough which the corresponding collar is led. The opening is also referred to as collar opening in the following. The intermediate part further comprises a bend which projects towards the cover and comprises the fastening opening corresponding to the screw. The bend is also referred to as screw bend in the following. The screw bend rests on the side of the collar facing away from the bottom and thus facing the cover. As a result, the screw bend is clamped between the collar and the cover. This results in an increased and/or more stable electric contact of the intermediate part with the housing. Thus, the operational safety of the heating device in further increased.

Preferably, the bottom for each screw comprises such a corresponding collar.

Preferably, the intermediate part for each collar comprises such a corresponding collar opening and screw bend.

Advantageously, the screw bend is a result of the corresponding collar opening. That is, the collar opening is designed such that material of the intermediate part remains, wherein this remaining material is bent to form the screw bend.

Advantageously, at least one of the at least one collars, in particular each collar, comprises an internal thread in which the corresponding screw is screwed.

The intermediate part and the cover can be arranged in the heating volume and in particular outside the control volume.

In preferred embodiments, the intermediate part and the cover are arranged inside the control volume, further preferably outside the heating volume. This results in a simplified manufacture of the heating device. Moreover, flow resistance caused by the conductor arrangement for the fluid flowing to the heating volume is at least reduced.

In advantageous embodiments, the cover covers the front face of at least one heating module, preferably of each heating module, from which the at least one plug projects. The cover further, for each plug, comprises a corresponding opening, through which the corresponding plug is led. The openings are also referred to as plug openings in the following. Thus the protection of the intermediate part is improved. Moreover, the protection of the front face and hence the inner volume of the heating module is improved.

The electric contact of the intermediate part with the respective outer shell in preferably realized by a mechanical contact of the intermediate part with the respective outer shell. That is, the intermediate part mechanically and electrically contacts the respective outer shell. This leads to a simplified manufacture and a more stable electric connection.

In preferred embodiments, the intermediate part, for each outer shell, comprises at least one spring element which protrudes from the corresponding arrangement opening, rests on the corresponding outer shell and is mechanically loaded against the outer shell. Preferably, the intermediate part, for each outer shell, comprises at least two such corresponding spring elements. Thus, the heating modules can be easily and precisely led through the corresponding arrangement openings. Furthermore, the electric and mechanical contact between the intermediate part and the outer shells is improved and mechanically stabilized. Hence, the manufacture of the heating device is simplified and operational safety is increased.

Advantageously, the spring elements are a result of the corresponding arrangement opening. That is, the arrangement opening is designed such that material of the intermediate part is remains, wherein this remaining material is bent to form the spring elements.

The cover preferably, for each spring element, comprises a corresponding bump, wherein each bump presses the intermediate part towards the bottom, such that the corresponding spring element is mechanically pressed against the corresponding outer shell. This results in a more stable contact between the intermediate part and the outer shell. Thus the operational safety is increased.

In preferred embodiments, at least one of the spring elements, preferably each spring element, is coated with a friction-resistant and conductive material on its side facing the corresponding outer shell. This leads to a more stable contact between the intermediate part and the outer shells resulting in a more stable electric contact. Therefore, the operational safety is increased.

The friction-resistant and conductive coating can in general be of any material. Preferably, the friction-resistant and conductive material is silver. That is, at least one of the spring elements is preferably coated with silver on its side facing the corresponding outer shell to increase friction.

In general, the intermediate part and/or the cover can be multi-part.

Preferably, the intermediate part is a one-piece part and monolithic. This leads to a simplified and cost reduced manufacture of the heat device.

Preferably, the cover is a one-piece part and monolithic. Thus the manufacture of the heating device is simplified and cost reduced.

In preferred embodiments, the intermediate part is a sheet-metal part, particularly a one-piece and monolithic sheet-metal part. This leads to a simplified and cost reduced manufacture of the heat device. Also, the intermediate part functions as an electromagnetic shield. Thus, the operation of the heating device is more safe and/or reliable.

The cover can be a sheet-metal part, particularly a one-piece and monolithic sheet-metal part.

The cover can be molded part, in particular injection-molded part or die-casted.

The cover can be electrically conductive.

It is understood, that the method for manufacturing the heating device as such also lays within the scope of the present invention.

The heating device is thereby preferably manufactured by leading the heating modules through the bottom, preassembling the intermediate part on the cover, and arranging the preassembled unit of the cover and the intermediate part on the bottom and fastening them to the bottom, such that each outer shell is led through the corresponding arrangement opening, and such that the intermediate part is electrically connected to the outer shells and the bottom of the housing.

The heating device can be used in any application to heat a fluid.

The heating device is used in particular in a motor vehicle to heat a fluid, for example air.

Advantageously, the control housing is electrically connected to the electrical ground of the motor vehicle. Particularly preferably, the first housing part is electrically connected to the electrical ground of the motor vehicle. For this purpose, an electrical plug or plug socket is preferably provided.

It goes without saying that the motor vehicle with the heating device is also subject of the present invention.

Further important features and advantages of the invention are apparent from the dependent claims, from the drawings, and from the accompanying figure description based on the drawings.

It is understood that the above features and those to be explained hereinafter can be used not only in the combination indicated in each case, but also in other combinations or on their own, without leaving from the scope of the present invention.

Preferred embodiments of the invention are shown in the drawings and will be explained in more detail in the following description, wherein identical reference signs refer to identical or similar or functionally identical components.

The Figures show, in each case schematically
- Fig. 1: an isometric view of an electric heating device with a housing,
- Fig. 2: a highly simplified, schematic diagram of a motor vehicle with the heating device,
- Fig. 3: an isometric view of a portion of the heating device toward a control volume,
- Fig. 4: a section through the heating device with a top view on the control volume,
- Fig. 5: an isometric view of a portion of the heating device toward a control volume,
- Fig. 6: a section through the heating device in the area of an opening of the housing,
- Fig. 7: another section through the heating device in the area of the control volume,
- Fig. 8: an isometric view of a portion of the heating device toward the control during manufacture of the heating device,
- Fig. 9: a section through a control housing of the heating device,
- Fig. 10: an enlarged view of the area marked X in Fig. 9,
- Fig. 11: an isometric view of a portion of the control housing in another exemplary embodiment,
- Fig. 12: a top view of the heating device in a further exemplary embodiment.

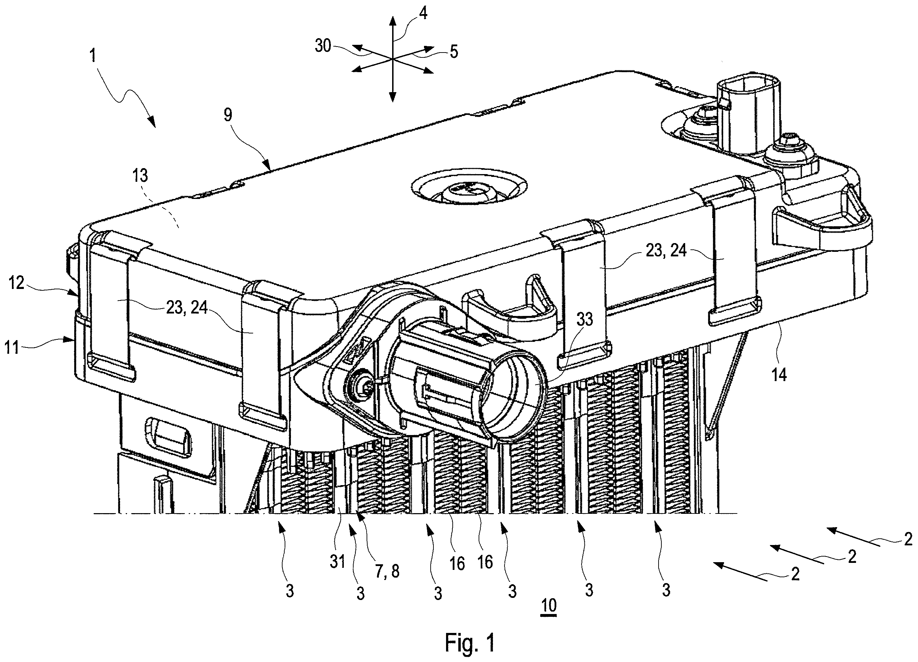

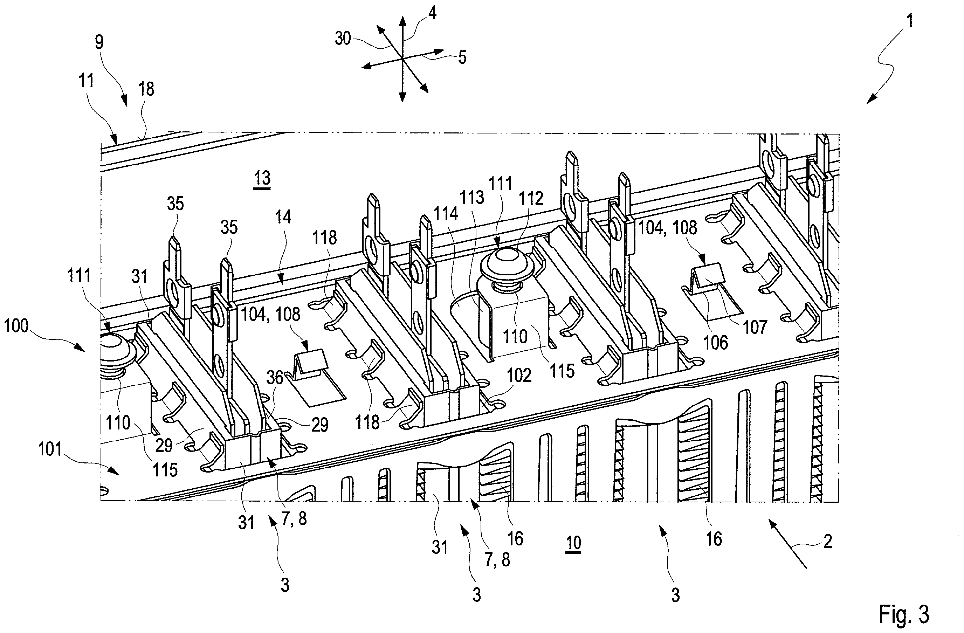

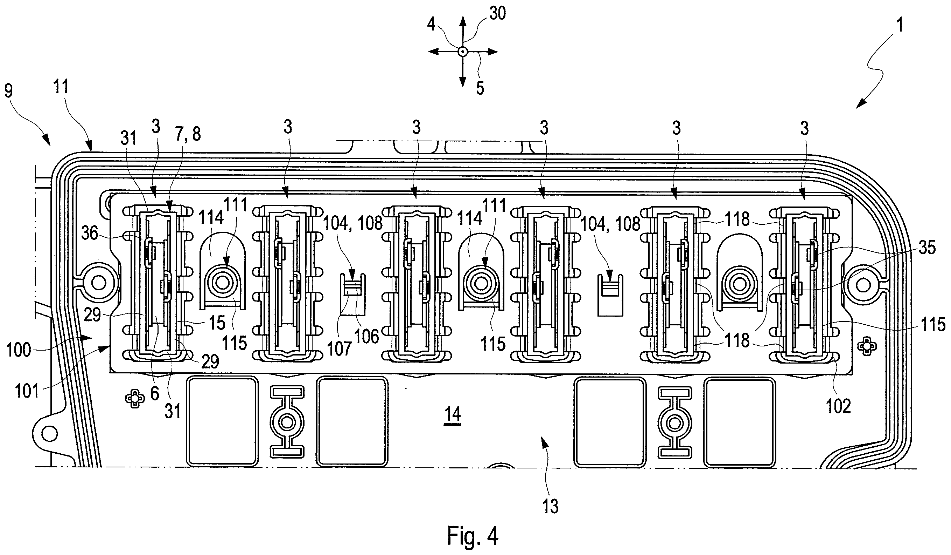

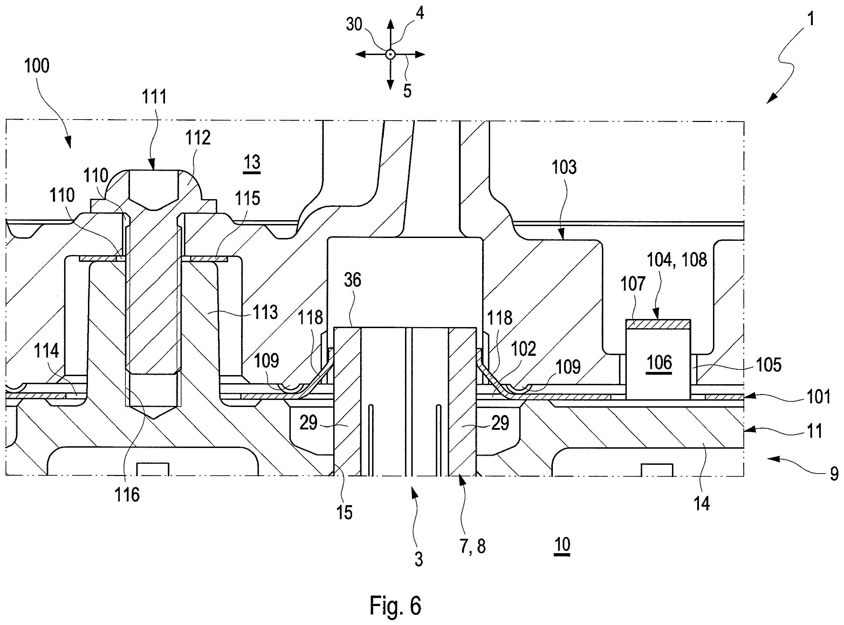

An electric heating device 1, as shown for example in Figures 1 to 12, is used for heating a fluid. For this purpose, a flow path 2 of the fluid (see Figure 1) leads through the heating device 1. At least two heating modules 3 of the heating device 1 are arranged in the flow path 2. The respective heating module 3 extends longitudinally in a longitudinal direction 4. The heating modules 3 are spaced apart from one another in a transverse direction 5 extending transversely to the longitudinal direction 4. The respective heating module 3 has at least one heating element 6 indicated in Figure 4. The heating element 6 is designed in such a way that it generates heat when electrically supplied during operation. As a result, the fluid is heated. The respective heating element 6 is designed, for example, as a PTC element, where PTC stands for "Positive Temperature Coefficient". The respective heating module 3 further comprises an electrically conductive outer shell 7, which encloses the at least one heating element 6. In the exemplary embodiments shown, the respective outer shell 7 is formed as a flat tube 8. As can be seen, for example, from Figure 1, the heating device 1 further comprises a housing 9, which is hereinafter referred to as the control housing 9. The control housing 9 is adjacent to a volume 10 through which the flow path 2 passes. The volume 10 is also referred to hereinafter as the heating volume 10. The control housing 9 in the shown exemplary embodiments has a first housing part 11 and a second housing part 12 electrically connected to each other. The first housing part 11 and the second housing part 12 delimit a volume 13 in the control housing 9 (see for example Figure 3), which is also referred to hereinafter as control volume 13. Power electronics (not shown) are arranged in the control volume 13, with which the respective heating module 3, in particular the heating elements 6, are electrically supplied. The housing 9 and is electrically conductive. In the shown exemplary embodiments thus the housing parts 11, 12, are each electrically conductive. The housing 9 has a bottom 14 which delimits the heating volume 10 and thus separates it from the control volume 13. In the shown exemplary embodiments, the first housing part 11 comprises the bottom 14. In the bottom 14, a corresponding opening 15 is provided for each heating module 13 (see in particular Figure 6). The respective opening 15 is also referred to hereinafter as the passage opening 15. The respective heating module 3 is inserted in longitudinal direction 4 through the associated passage opening 15 and thus enters the control volume 13. Within the control volume 13, the respective heating module 3 is further electrically connected to the power electronics (not shown) in order to electrically supply the heating elements 6. To this end, each heating module 3 comprises at least one electric plug 35 (see Figure 3) arranged in the control volume 13 and connected to the power electronics. In the shown exemplary embodiments, each heating module 3 comprises two such plugs 35. In the shown exemplary embodiments, a sealing arrangement (not visible) is arranged in the respective passage opening 15 between the outer shell 7 and the passage opening 15 which fluidically seals the control volume 13 from the heating volumes 10. Preferably, the sealing arrangement further electrically isolates the outer shells 7 from the first housing part 11.

In the shown exemplary embodiments, each outer shell 7 has two opposing outer walls 29 in the transverse direction 5. In addition, the respective outer shell 7 has two opposing side walls 31 in a vertical direction 30 extending transversely to the longitudinal direction 4 and transversely to the transverse direction 5. The side walls 30 connect the outer walls 29 to each other and vice versa.

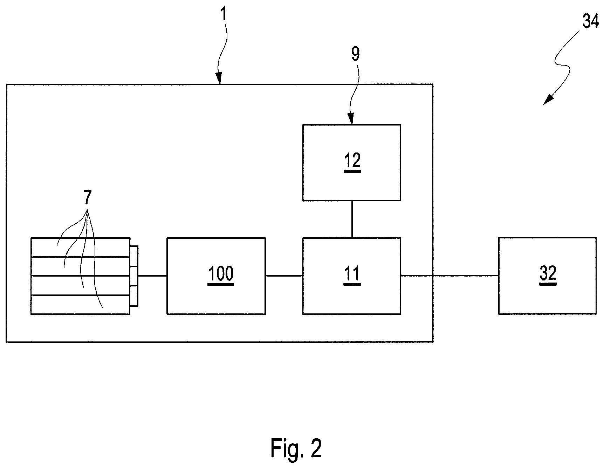

As can be seen in particular from Figures 2 to 8, the heating device 1 has a conductor arrangement 100. The conductor arrangement 100 is separate from the sealing arrangement. The conductor arrangement 100 electrically connects the respective outer shell 7 to the housing 9. In the shown exemplary embodiments, the conductor arrangement 100 electrically connects the respective outer shell 7 to the first housing part 11. Thus, the outer shells 7 are electrically connected to the first housing part 11 and to each other. In addition, the outer shells 7 are electrically connected to the second housing part 12. As a consequence, the outer shells 7 and the housing parts 11, 12 are connected to the same electrical potential. As can be seen from Figure 2, the electrical potential is a ground 32. The heating device 1 thereby electrically connected to a corresponding ground 32. In the exemplary embodiment shown in Figure 2, this is done by electrically connecting the first housing part 11 to the ground 32. For this purpose, a corresponding electrical plug socket 33 can be provided on the first housing part 11, as can be seen in Figure 1. In the exemplary embodiment shown in Figure 2, the heating device 1 is used in a motor vehicle 34, which is not otherwise shown. The first housing part 11 is electrically connected to the electrical ground 32 of the motor vehicle 34.

In the exemplary embodiments shown, the conductor arrangement 100 is arranged outside of the heating volume 10 and within the control volume 13. In the exemplary embodiments shown, the conductor arrangement 100 is electrically connected to the bottom 14 of the first housing portion 11.

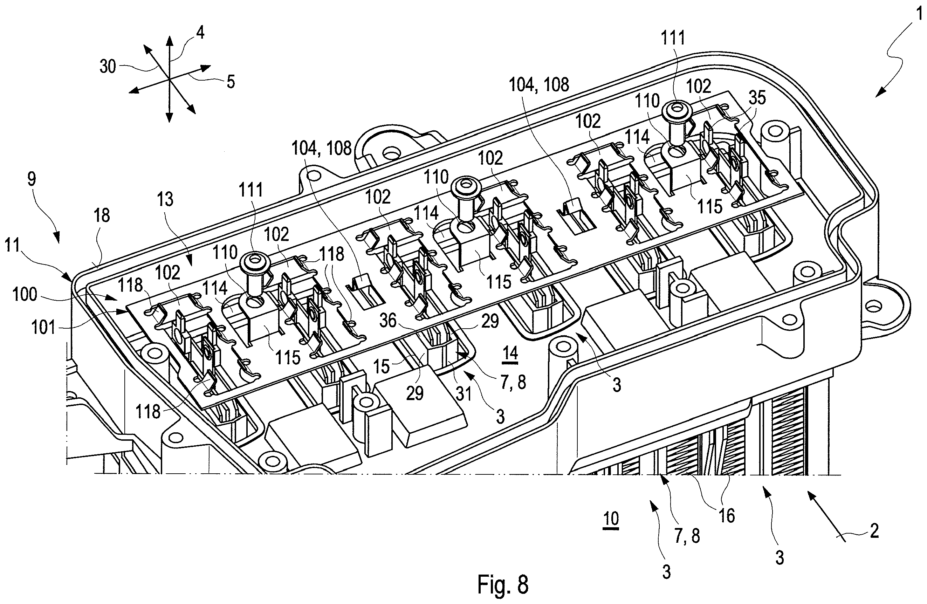

As shown in Figure 2 to 8, the conductor arrangement 100 comprises an electrically conductive intermediate part 101. The conductor arrangement 100 further, on the side of the intermediate part 101 averted form the bottom 14, comprises a cover 103 which covers the intermediate part 101. For the sake of comprehension, the cover 103 is not shown in Figures 2, 3 and 8 and the intermediate part 101 is shown distanced to the bottom 14 in Figure 8. Furthermore, for the sake of comprehension, the second housing part 12 is not shown in Figures 3 to 8.

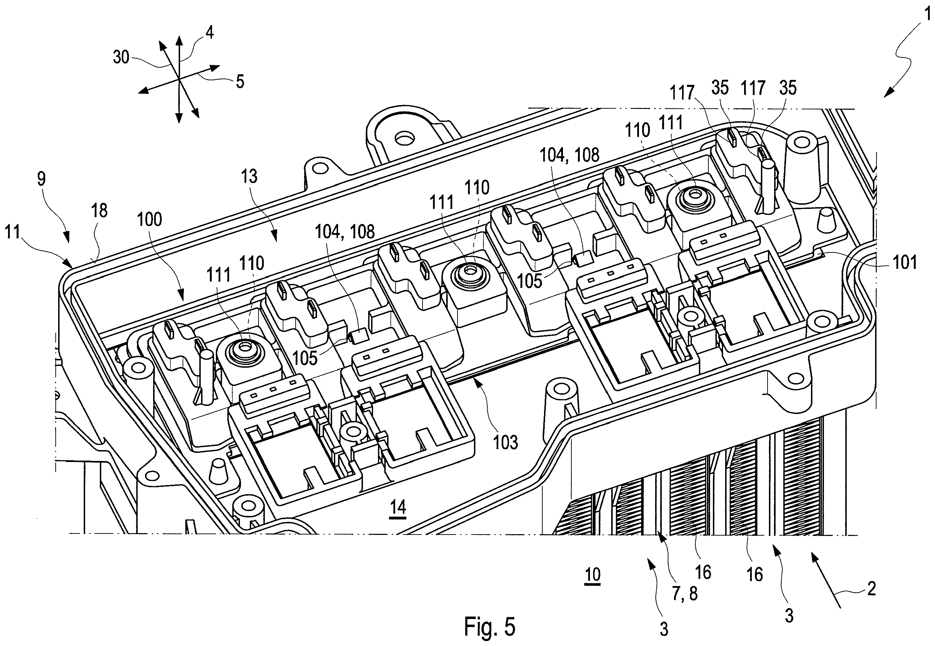

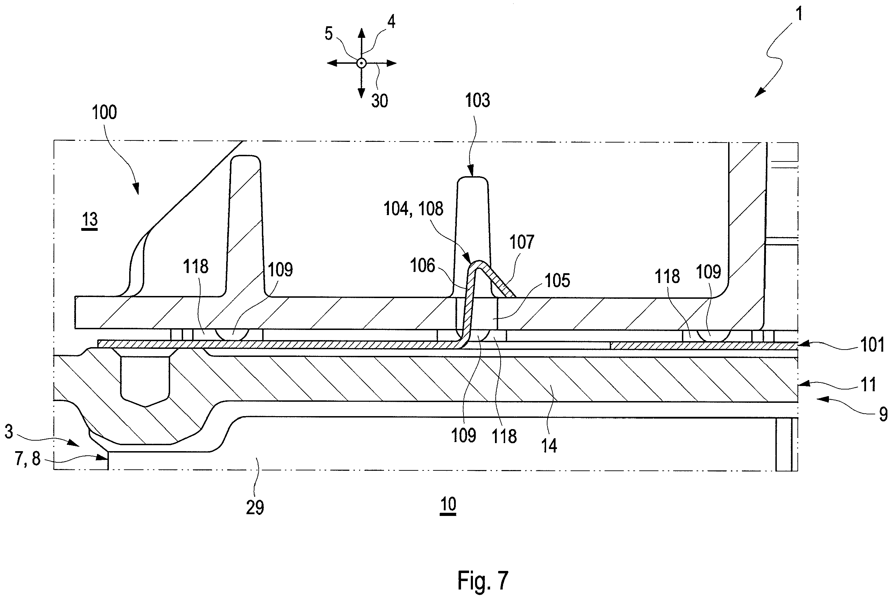

The intermediate part 101 rests against the bottom 14 and is electrically connected to the bottom 14 and to the outer shells 7, as in particular shown in Figures 3, 4 and 6. The intermediate part 101, for each outer shell 7 comprises a corresponding opening 102, through which the corresponding outer shell 7 is led in longitudinal direction 4 (see for instance Figures 3 and 4). The openings 102 are also referred to as arrangement opening 102 in the following. As in particular shown in Figures 3, 4 and 6, the intermediate part 101 comprises at least one bend 104 which projects in the direction of the cover 103. The bend 104 will also be referend to as closure bend 104 in the following. As shown in particular in Figures 5, 6 and 7, the cover 103 for each closure bend 104 comprises a corresponding opening 105. The opening 105 will also be referend to as closure cover opening 105 in the following. Each closure bend 104 is led through the corresponding cover opening 105 and engages with the cover 103 to form a form closure, as in particular shown in Figures 6 and 7. This allows the intermediate part 101 to be preassembled with the cover 103. Thus the intermediate part 101 together with the cover 103 can be easily and safely mounted in the housing 9. In the examples shown, the intermediate part 101, by way of example, comprises two closure bends 104 which are distanced to each other in transverse direction 5 (see Figure 4). Hence, the cover 103 comprises two cover openings 105 distanced to each other in transverse direction 5 (see Figure 5).

In the examples shown, each closure bend 104 is designed in the manner of a spring clip 108. For this, each closure bend 104 comprises a lower section 106 on the side facing the bottom 14 and an upper section 107 connected to the lower section 106 and running inclined to the lower section 106 towards the bottom 14. Moreover, the closure bend 104 and the corresponding cover opening 105 are designed such that, when the cover 103 and the intermediate part are moved toward each other in longitudinal direction 4 each closure bend 104 is led through the corresponding cover opening 105 and latches into the cover 103 to form the form closure. Thus, the intermediate part 101 and the cover 103 are connected to each other by simply leading each closure bend 104 through the corresponding cover opening 105.

As indicated in Figure 8, the heating device 1 is preferably manufactured by leading each heating module 3 through the corresponding passage opening 15 in the bottom 14 into the control volume 13, such that a longitudinal front face 36 of the respective heating module 3 is arranged in the control volume 13 of the latter housing 9. Additionally, the intermediate part 101 is preassembled on the cover 103. The cover 103 together with the preassembled intermediate part 101 is arranged on the bottom 14 such that each outer shell 7 is led through the corresponding arrangement opening 102. This is achieved by moving the cover 103 together with the preassembled intermediate part 101 in vertical direction 30 towards the bottom 14. Then the intermediate part 101 and the cover 103 are fastened to the bottom 14.

In the exemplary embodiments shown, the intermediate part 101 and the cover 103 are fattened to the bottom 14 by means of common screws 111 (see for instance Figures 3 to 6). To this end, in the exemplary embodiments shown, the intermediate part 101 and the cover 103 comprise corresponding openings 110 for each screw 111. The openings 110 are also referred to as fastening openings 110 in the following. A common screw 111 is thereby led through the corresponding fastening openings 110 and screwed into the bottom 14, such that a screw head 112 of the screw 111 rests on the cover 103 and presses the cover 103 and the intermediate part 101 towards the bottom 14 (see in particular Figures 5 and 6). In the exemplary embodiments shown, by way of example, three such screws 111 fasten the intermediate part 101 and the cover 103 to the bottom 14. Thus the intermediate part 101 and the cover 103 comprises three pairs of corresponding fastening openings 110. As in particular shown in Figure 6, in the exemplary embodiments shown, the bottom 14, for at least one screw 111 comprises a corresponding collar 113. In the exemplary embodiments shown, the bottom 14 for each screw 111 comprises a corresponding collar 113. In Figure 6, for the sake of better overview, only the outer shell 7 of the visible heating module 3 is shown. Each collar 113 projects towards the intermediate part 101. Each screw 111 is arranged in the corresponding collar 113. In the exemplary embodiments shown each collar 113 comprises an internal thread 116 in which the corresponding screw 111 is screwed (see Figure 6). As can be seen for example in Figure 3, the intermediate part 101, for each collar 113 comprises a corresponding collar opening 114, thorough which the corresponding collar 113 is led. The respective collar opening 114 results in a screw bend 115 which is formed to project towards the cover 103 and comprises the fastening opening 110 corresponding to the corresponding screw 111. Each screw bend 115 thereby rests on the side of the collar 113 facing away from the bottom 14 and thus facing the cover 103. The screw bend 115 is thus clamped between the collar 113 and the cover 103 by means of the corresponding screw 111. This leads to an increased an improved conductive contact of the intermediate part 101 with the bottom 14.

As shown in Figure 6, in the exemplary embodiments shown, the cover 103, on the side facing the intermediate part 101, comprises at least one projecting bump 109 which presses the intermediate part 101 towards the bottom 14. This leads to an increased and more stable conductive contact of the intermediate part 101 with the bottom 14. As shown in Figure 6, in the exemplary embodiments shown, the cover 103, on each transverse side of each arrangement opening 102 comprises at least one such bump 109.

As for instance shown in Figures 3 and 8, the plugs 35 of each heating module 3 project from the corresponding vertical front face 36 of the heating module 3. In the exemplary embodiments shown, the cover 103 covers each front face 36 and, for each plug 35 comprises a corresponding plug opening 117, through which the corresponding plug 35 is led.

In the exemplary embodiments shown, the electric contact of the intermediate part 101 with the respective outer shell 7 is achieved by spring elements 118 of the intermediate part 101. For this purpose, in the exemplary embodiments shown, the intermediate part 101, for each outer shell 7 comprises corresponding spring elements 118 which protrude from the corresponding arrangement opening 102 and rest on the corresponding outer shell 7 and are mechanically loaded against the outer shell 7. Each of the spring elements 118 is preferably coated with a friction-resistant and conductive material, in particular with silver, on its side facing the corresponding outer shell 7. In the exemplary embodiments shown, the spring elements 118 each rest on a corresponding outer wall 29 of the corresponding outer shell 7, such that each outer wall 29 is in contact with at least one spring element 118. In the exemplary embodiments shown, each outer wall 29 is in contact with two or three spring elements 118. In the exemplary embodiments shown, the cover 103, for each spring element 118 comprises a corresponding bump 109, as can be seen in Figures 6 and 7.

In the exemplary embodiments shown, the intermediate part 101 is a one-piece and monolithic part, preferably a one-piece sheet metal part. In the exemplary embodiments shown, the cover 103 is a one piece-part and monolithic part. In the exemplary embodiments shown, the cover 103 is an injection-mold part. The cover 103 might be electrically insulating.

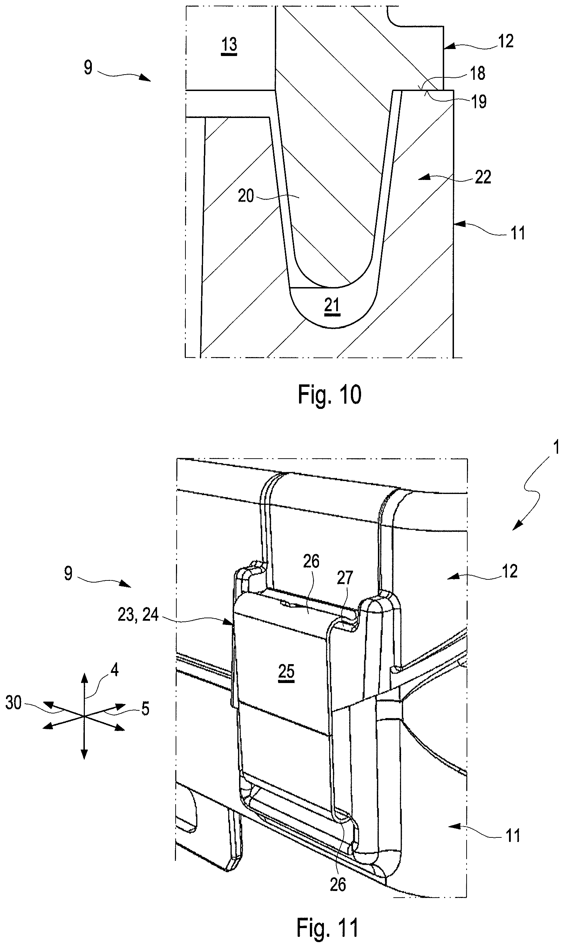

As can be seen for example from Figures 1, 9 and 11, the housing parts 11, 12 are electrically connected to one another. For this purpose, the respective housing part 11, 12 has an associated support surface 18, 19, the support surfaces 18, 19 resting on one another. That is, the first housing part 11 has a support surface 18 and the second housing part 12 has a support surface 19. The support surface 19 of the second housing part 12 is also referred to hereinafter as the counter-support surface 19 for better differentiation. As can be seen in particular from Figure 10, the support surface 18 rests on the counter-support surface 19. This results in an electrical connection between the housing parts 11, 12. As can be seen, for example, from Figures 1 and 10, the support surface 18 and the counter-support surface 19 of the exemplary embodiments shown are each on the outside and circumferentially transverse to the longitudinal direction 4. Support surface 18 and counter-support surface 19 are thereby arranged outside the control volume 13 transversely to the longitudinal direction 4 and extend circumferentially.

As can be seen from Figure 10, in the exemplary embodiments shown, one of the housing parts 11, 12 has a shoulder 20 projecting in the longitudinal direction 4 and the other housing part 11, 12 has an associated receptacle 21, which engage in one another in the manner of a tongue-and-groove connection 22. In the exemplary embodiments shown, the first housing part 11 has the receptacle 21 and the second housing part 12 has the shoulder 20. The shoulder 20 and the receptacle 21 are circumferential. As can further be seen from Figure 10, the shoulder 20 and the receptacle 21 are arranged on the side of the support surface 18 and the counter-support surface 19 facing the control volume 13. As can also be seen from Figure 10, the receptacle 21 is not completely filled with the shoulder 20. The receptacle 21 is filled, in particular before insertion of the shoulder 20, with an adhesive sealing compound, for example a silicone compound, which is not shown. This seals the control volume 13 from the outside.

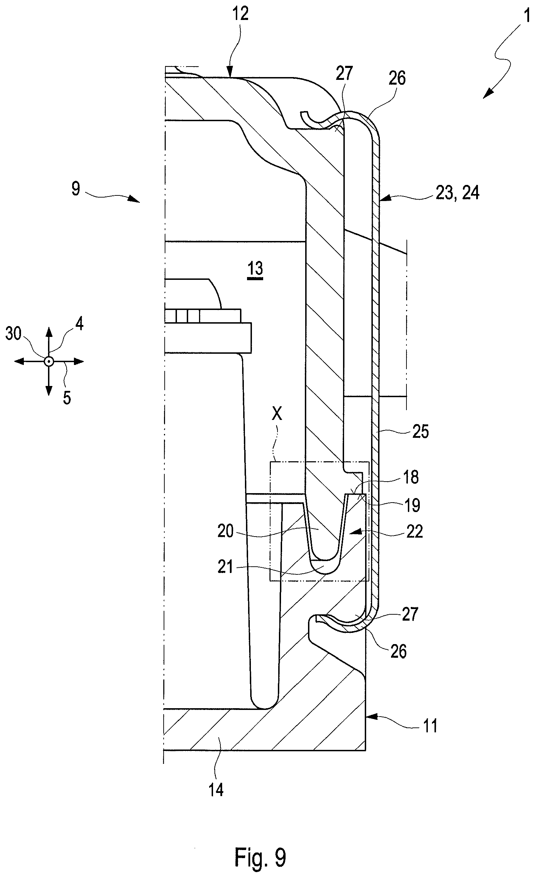

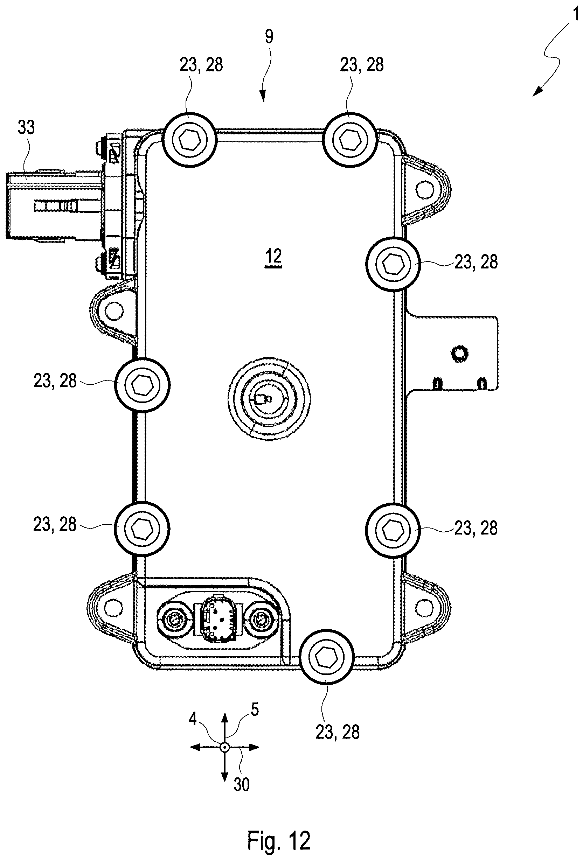

According to Figures 1 and 9 and 10, a further electrical connection of the housing parts 11, 12 in the exemplary embodiments shown is made by a mechanical connection 23 of the housing parts 11, 12 to one another. As can be seen from Figures 1 and 12, two or more such connections 23 are provided, which are arranged circumferentially spaced apart from one another. In the embodiments of Figures 1 to 11, the respective connection 23 is formed by an electrically conductive spring closure 24. The spring closure 24 has a spring base 25, from each end of which a spring bend 26 is bent over, one of the bends 26 engaging in the first housing part 11 and the other bend 26 engaging in the second housing part 12. Thus, the housing parts 11, 12 are mechanically loaded against each other along the spring closure 24. As can be seen, for example, from Figure 9, the respective housing part 11, 12 has a bead 27 for the respective associated spring bend 26, so that the spring bends 26 are secured to the respective associated housing part 11, 12. As can also be seen from Figure 9, the respective spring base 25 of the exemplary embodiments shown extends in the longitudinal direction 4.

In the exemplary embodiment of Figures 1 to 9, the respective spring bend 26 associated with the second housing part 12 engages externally in the second housing part 12 in the longitudinal direction 4. The embodiment example shown in Figure 11 differs from this in that the spring bends 26 associated with the second housing part 12 engage in the second housing part 12 offset in the longitudinal direction 4 towards the first housing part 1.

The exemplary embodiment shown in Figure 12 differs from the exemplary embodiments shown in Figures 1 to 8 in that the respective connection 23 is formed by an indicated housing screw connection 28.

As can be seen for example in Figures 1 and 3, the heating device 1 of the exemplary embodiments shown has an undulating corrugated rib 16 on the outer wall 29 of the respective outer shell 7 through which fluid can flow. Thus, a corrugated rib 16 is arranged between each of the facing outer walls 29 of the heating modules 3. In addition, in the exemplary embodiments shown, a corrugated rib 16 is also arranged in each case on the outermost outer walls 29 in the transverse direction 5. The respective corrugated rib 16 is connected to the at least one associated outer wall 29 in a heat-transferring manner. Preferably, the respective corrugated rib 16 is electrically conductive and mechanically connected to the respective associated outer wall 29. Thus, the respective corrugated rib 16 is also connected at the same electrical potential as the outer shells 7 and the control housing 9 and thus at equipotential.

The equipotential connection of the outer shells 7, the housing parts 11, 12 and, as the case may be, the corrugated ribs 16, makes it possible to detect undesirable electrical currents and leaks within the heating device 1 easily and reliably, for example by connecting them to the electrical ground 32. Thus, the operational safety is increased. In addition, a disturbance of the power electronics is reduced. Furthermore, arranging the conductor arrangement 100 inside the control volume 13 avoids a flow resistance for fluid caused by the conductor arrangement 100.

## Claims

1. Electric heating device (1), in particular for a motor vehicle (34),
- with a heating volume (10) through which a flow path (2) of a fluid leads,
- wherein at least two spaced heating modules (3) are arranged in the heating volume (10), which extend in a longitudinal direction (4) and are spaced apart from one another in a transverse direction (5) extending transversely to the longitudinal direction (4),
- wherein the respective heating module (3) comprises at least one electrical heating element (6) which generates heat when electrically supplied so that the heating module (3) heats the fluid,
- wherein the respective heating module (3) has an electrically conductive outer shell (7), in particular an electrically conductive flat tube (8),
- with an electrically conductive control housing (9), which delimits a control volume (13),
- wherein power electronics for electrically supplying the heating modules (3) are arranged in the control volume (13),
- wherein the housing (9) has a bottom (14) which delimits the heating volume (10),
- wherein the bottom (14) for the respective heating module (3) has a passage opening (15) through which the heating module (3) penetrates into the control volume (13) in the longitudinal direction (4),
- wherein the heating modules (3) in the control volume (13) are electrically connected to the power electronics,
- with an electrically conductive conductor arrangement (100) which electrically connects the respective outer shell (7) to the housing (9),
- wherein the conductor arrangement (100) comprises an intermediate part (101) which rests against the bottom (14) and is electrically connected to the bottom (14) and to the outer shells (7),
- wherein the intermediate part (101) for each outer shell (7) comprises a corresponding arrangement opening (102), through which the corresponding outer shell (7) is led in longitudinal direction (4), **characterized**
- **in that** the conductor arrangement (100) on the side of the intermediate part (101) averted form the bottom (14) comprises a cover (103) which covers the intermediate part (101),
- **in that** the intermediate part (101) comprises at least one closure bend (104) which projects in the direction of the cover (103),
- **in that** the cover (103) for each closure bend (104) comprises a corresponding cover opening (105),
- **in that** each closure bend (104) is led through the corresponding cover opening (105) and engages with the cover (103) to form a form closure.

2. Heating device according to claim 1,
**characterized**
- **in that** at least one closure bend (104) comprises a lower section (106) on the side facing the bottom (14) and an upper section (107) connected to the lower section (106) and running inclined to the lower section (106) towards the bottom (14), such that the closure bend (104) is designed in the manner of a spring clip (108),
- **in that** the closure bend (104) and the corresponding cover opening (105) are designed such that, when the cover (103) and the intermediate part are moved toward each other, the closure bend (104) is led through the cover opening (105) and latches into the cover opening (105).

3. Heating device according to claim 1 or 2,
**characterized**
**in that** the cover (103), on the side facing the intermediate part (101), comprises at least one projecting bump (109) which presses the intermediate part (101) towards the bottom (14).

4. Heating device according to any of claims 1 to 3,
**characterized**
- **in that** the intermediate part (101) and the cover (103) comprise corresponding fastening openings (110),
- **in that** a common screw (111) is led through the corresponding fastening openings (110) and screwed into the bottom (14), such that a screw head (112) of the screw (111) rests on the cover (103) and presses the cover (103) and the intermediate part (101) towards the bottom (14).

5. Heating device according the claim 4,
**characterized**
- **in that** the bottom (14) for at least one screw (111) comprises a corresponding collar (113) which projects towards the intermediate part (101) and in which the screw (111) is arranged,
- **in that** the intermediate part (101) for the collar (113) comprises a corresponding collar opening (114), thorough which the corresponding collar (113) is led,
- **in that** the intermediate part (101) comprises a screw bend (115) which projects towards the cover (103) and comprises the fastening opening (110a) corresponding to the screw (111),
- **in that** the screw bend (115) rests on the side of the collar (113) facing away from the bottom (14).

6. Heating device according to claim 5,
**characterized**
**in that** the collar (113) comprises an internal thread (116) in which the corresponding screw (111) is screwed.

7. Heating device according to any of claims 1 to 6,
**characterized**
**in that** the intermediate part (101) and the cover (103) are arranged inside the control volume (13).

8. Heating device according to claims 7,
**characterized**
- **in that** each heating module (3) comprises at least one electric plug (35) which projects from a longitudinal front face (36) of the heating module (3) and which is connected to the power electronics,
- **in that** the cover (103) covers each front face (36),
- **in that** the cover (103) for each plug (35) comprises a corresponding plug opening (117), through which the corresponding plug (35) is led.

9. Heating device according to any of claims 1 to 8,
**characterized**
**in that** the intermediate part (101) for each outer shell (7) comprises corresponding spring elements (118) which protrude from the corresponding arrangement opening (102) and rest on the corresponding outer shell (7) and are mechanically loaded against the outer shell (7).

10. Heating device according to claim 9,
**characterized**
**in that** at least one of the spring elements (118) is coated with a friction-resistant and conductive material, in particular with silver, on its side facing the corresponding outer shell (7).

11. Heating device according to any of claims 1 to 10,
**characterized**
**in that** the intermediate part (101) and/or the cover (103) is a one piece part.

12. Heating device according to any of claims 1 to 11,
**characterized**
**in that** the intermediate part (101) and/or the cover (103) is a sheet metal part.

13. Heating device according to any of claims 1 to 12,
**characterized**
**in that** the cover (103) is electrically insulating.

14. Method for manufacturing a heating device (1) of any of claims 1 to 13,
- wherein the heating modules (3) are led through the bottom (14),
- wherein the intermediate part (101) is preassembled on the cover (103),
- wherein the cover (103) together with the intermediate part (101) is arranged on the bottom (14) and fastened to the bottom (14), such that each outer shell (7) is led through the corresponding arrangement opening (102).

15. Motor vehicle (34) with a heating device (1) according to any of claims 1 to 13, wherein the control housing (9) is electrically connected to an electrical ground (32) of the motor vehicle (34).

## Patentansprüche

1. Elektrische Heizvorrichtung (1), insbesondere für ein Kraftfahrzeug (34),
- mit einem Heizvolumen (10), durch das ein Strömungspfad (2) eines Fluids führt,
- wobei im Heizvolumen (10) mindestens zwei beabstandete Heizmodule (3) angeordnet sind, die sich in einer Längsrichtung (4) erstrecken und in einer Querrichtung (5), die sich quer zur Längsrichtung (4) erstreckt, voneinander beabstandet sind,
- wobei das jeweilige Heizmodul (3) mindestens ein elektrisches Heizelement (6) umfasst, das Wärme erzeugt, wenn es elektrisch versorgt wird, sodass das Heizmodul (3) das Fluid erwärmt,
- wobei das jeweilige Heizmodul (3) eine elektrisch leitende Außenschale (7), insbesondere ein elektrisch leitendes Flachrohr (8), aufweist,
- mit einem elektrisch leitenden Steuergehäuse (9), das ein Steuervolumen (13) begrenzt,
- wobei eine Leistungselektronik zum elektrischen Versorgen der Heizmodule (3) im Steuervolumen (13) angeordnet ist,
- wobei das Gehäuse (9) einen Boden (14) aufweist, der das Heizvolumen (10) begrenzt,
- wobei der Boden (14) für das jeweilige Heizmodul (3) eine Durchgangsöffnung (15) aufweist, durch welche das Heizmodul (3) in der Längsrichtung (4) in das Steuervolumen (13) eindringt,
- wobei die Heizmodule (3) im Steuervolumen (13) elektrisch mit der Leistungselektronik verbunden sind,
mit einer elektrisch leitenden Leiteranordnung (100), welche die jeweilige Außenschale (7) mit dem Gehäuse (9) elektrisch verbindet,
- wobei die Leiteranordnung (100) einen Zwischenteil (101) umfasst, welches am Boden (14) anliegt und mit dem Boden (14) und mit den Außenschalen (7) elektrisch verbunden ist,
- wobei der Zwischenteil (101) für jede Außenschale (7) eine entsprechende Anordnungsöffnung (102) umfasst, durch welche die entsprechende Außenschale (7) in Längsrichtung (4) geführt wird,
**dadurch gekennzeichnet,**
- **dass** die Leiteranordnung (100) auf der dem Boden (14) abgewandten Seite des Zwischenteils (101) eine Abdeckung (103) umfasst, die den Zwischenteil (101) abdeckt,
- **dass** der Zwischenteil (101) mindestens einen Verschlussbogen (104) umfasst, welcher in Richtung der Abdeckung (103) vorspringt,
- **dass** die Abdeckung (103) für jeden Verschlussbogen (104) eine entsprechende Abdeckungsöffnung (105) umfasst,
- **dass** jeder Verschlussbogen (104) durch die entsprechende Abdeckungsöffnung (105) geführt wird und in die Abdeckung (103) eingreift, um einen Formschluss zu bilden.

2. Heizvorrichtung nach Anspruch 1,
**dadurch gekennzeichnet,**
- **dass** mindestens ein Verschlussbogen (104) einen unteren Abschnitt (106) auf der dem Boden (14) zugewandten Seite und einen mit dem unteren Abschnitt (106) verbundenen, und zum unteren Abschnitt (106) zum Boden (14) hin geneigt verlaufenden oberen Abschnitt (107) umfasst, sodass der Verschlussbogen (104) nach Art einer Federklammer (108) gestaltet ist,
- **dass** der Verschlussbogen (104) und die entsprechende Abdeckungsöffnung (105) gestaltet sind, sodass der Verschlussbogen (104) beim Bewegen der Abdeckung (103) und des Zwischenteils zueinander durch die Abdeckungsöffnung (105) geführt wird und in die Abdeckungsöffnung (105) einrastet.

3. Heizvorrichtung nach Anspruch 1 oder 2,
**dadurch gekennzeichnet,**
**dass** die Abdeckung (103) auf der dem Zwischenteil (101) zugewandten Seite mindestens einen vorspringenden Höcker (109) umfasst, der den Zwischenteil (101) zum Boden (14) hin drückt.

4. Heizvorrichtung nach einem der Ansprüche 1 bis 3,
**dadurch gekennzeichnet,**
- **dass** der Zwischenteil (101) und die Abdeckung (103) entsprechende Befestigungsöffnungen (110) umfassen,
- **dass** eine gemeinsame Schraube (111) durch die entsprechenden Befestigungsöffnungen (110) geführt, und in den Boden (14) eingeschraubt wird, sodass ein Schraubenkopf (112) der Schraube (111) auf der Abdeckung (103) aufliegt und die Abdeckung (103) und den Zwischenteil (101) zum Boden (14) hin drückt.

5. Heizvorrichtung nach Anspruch 4,
**dadurch gekennzeichnet,**
- **dass** der Boden (14) für mindestens eine Schraube (111) einen entsprechenden Kragen (113) umfasst, der zum Zwischenteil (101) hin vorspringt und in dem die Schraube (111) angeordnet ist,
- **dass** der Zwischenteil (101) für den Kragen (113) eine entsprechende Kragenöffnung (114) umfasst, durch welche der entsprechende Kragen (113) geführt wird,
- **dass** der Zwischenteil (101) einen Schraubbogen (115) umfasst, der zur Abdeckung (103) hin vorspringt und die der Schraube (111) entsprechende Befestigungsöffnung (110a) umfasst,
- **dass** der Schraubbogen (115) auf der dem Boden (14) abgewandten Seite des Kragens (113) aufliegt.

6. Heizvorrichtung nach Anspruch 5,
**dadurch gekennzeichnet,**
**dass** der Kragen (113) ein Innengewinde (116) umfasst, in das die entsprechende Schraube (111) eingeschraubt wird.

7. Heizvorrichtung nach einem der Ansprüche 1 bis 6,
**dadurch gekennzeichnet,**
**dass** der Zwischenteil (101) und die Abdeckung (103) innerhalb des Steuervolumens (13) angeordnet sind.

8. Heizvorrichtung nach Anspruch 7,
**dadurch gekennzeichnet,**
- **dass** jedes Heizmodul (3) mindestens einen elektrischen Stecker (35) umfasst, der aus einer Längsstirnseite (36) des Heizmoduls (3) vorspringt und der mit der Leistungselektronik verbunden ist,
- **dass** die Abdeckung (103) jede Stirnseite (36) abdeckt,
- **dass** die Abdeckung (103) für jeden Stecker (35) eine entsprechende Steckeröffnung (117) umfasst, durch welche der entsprechende Stecker (35) geführt wird.

9. Heizvorrichtung nach einem der Ansprüche 1 bis 8,
**dadurch gekennzeichnet,**
**dass** der Zwischenteil (101) für jede Außenschale (7) entsprechende Federelemente (118) umfasst, die aus der entsprechenden Anordnungsöffnung (102) herausragen und auf der entsprechenden Außenschale (7) aufliegen und mechanisch gegen die Außenschale (7) belastet sind.

10. Heizvorrichtung nach Anspruch 9,
**dadurch gekennzeichnet,**
**dass** mindestens eines der Federelemente (118) auf seiner der entsprechenden Außenschale (7) zugewandten Seite mit einem reibungsbeständigen und leitenden Material, insbesondere mit Silber, beschichtet ist.

11. Heizvorrichtung nach einem der Ansprüche 1 bis 10,
**dadurch gekennzeichnet,**
**dass** der Zwischenteil (101) und/oder die Abdeckung (103) ein Teil in einem Stück ist.

12. Heizvorrichtung nach einem der Ansprüche 1 bis 11,
**dadurch gekennzeichnet,**
**dass** der Zwischenteil (101) und/oder die Abdeckung (103) ein Blechteil ist.

13. Heizvorrichtung nach einem der Ansprüche 1 bis 12,
**dadurch gekennzeichnet,**
**dass** die Abdeckung (103) elektrisch isolierend ist.

14. Verfahren zur Herstellung einer Heizvorrichtung (1) nach einem der Ansprüche 1 bis 13,
- wobei die Heizmodule (3) durch den Boden (14) geführt werden,
- wobei der Zwischenteil (101) an der Abdeckung (103) vormontiert ist,
- wobei die Abdeckung (103) gemeinsam mit dem Zwischenteil (101) auf dem Boden (14) angeordnet und am Boden (14) befestigt wird, sodass jede Außenschale (7) durch die entsprechende Anordnungsöffnung (102) geführt wird.

15. Kraftfahrzeug (34) mit einer Heizvorrichtung (1) nach einem der Ansprüche 1 bis 13, wobei das Steuergehäuse (9) mit einer elektrischen Masse (32) des Kraftfahrzeugs (34) elektrisch verbunden ist.

## Revendications

1. Dispositif de chauffage électrique (1), en particulier pour un véhicule à moteur (34),
- avec un volume de chauffage (10) à travers lequel passe un trajet d'écoulement (2) d'un fluide,
- dans lequel au moins deux modules de chauffage espacés (3) sont agencés dans le volume de chauffage (10), qui s'étendent dans une direction longitudinale (4) et sont espacés l'un de l'autre dans une direction transversale (5) s'étendant transversalement à la direction longitudinale (4),
- dans lequel le module de chauffage (3) respectif comprend au moins un élément de chauffage électrique (6) qui génère de la chaleur lorsqu'il est alimenté électriquement de telle sorte que le module de chauffage (3) chauffe le fluide,
- dans lequel le module de chauffage respectif (3) présente une coque externe électriquement conductrice (7), en particulier un tube plat électriquement conducteur (8),
- avec un boîtier de commande électriquement conducteur (9), qui délimite un volume de commande (13),
- dans lequel une électronique de puissance pour alimenter électriquement les modules de chauffage (3) est agencée dans le volume de commande (13),
- dans lequel le boîtier (9) présente un fond (14) qui délimite le volume de chauffage (10),
- dans lequel le fond (14) du module de chauffage (3) respectif présente une ouverture de passage (15) à travers laquelle le module de chauffage (3) pénètre dans le volume de commande (13) dans la direction longitudinale (4),
- dans lequel les modules de chauffage (3) dans le volume de commande (13) sont connectés électriquement à l'électronique de puissance,
- avec un agencement conducteur électriquement conducteur (100) qui connecte électriquement la coque externe respective (7) au boîtier (9),
- dans lequel l'agencement conducteur (100) comprend une partie intermédiaire (101) qui repose contre le fond (14) et est connectée électriquement au fond (14) et aux coques externes (7),
- dans lequel la partie intermédiaire (101) pour chaque coque externe (7) comprend une ouverture d'agencement correspondante (102), par laquelle la coque externe correspondante (7) est conduite dans la direction longitudinale (4),
**caractérisé**
- **en ce que** l'agencement conducteur (100) du côté de la partie intermédiaire (101) opposé au fond (14) comprend un couvercle (103) qui recouvre la partie intermédiaire (101),
- **en ce que** la partie intermédiaire (101) comprend au moins un coude de fermeture (104) qui fait saillie dans la direction du couvercle (103),
- **en ce que** le couvercle (103) comprend pour chaque coude de fermeture (104) une ouverture de couvercle correspondante (105),
- **en ce que** chaque coude de fermeture (104) est conduit à travers l'ouverture de couvercle correspondante (105) et vient en prise avec le couvercle (103) pour former une fermeture de forme.

2. Dispositif de chauffage selon la revendication 1,
**caractérisé**
- **en ce qu'**au moins un coude de fermeture (104) comprend une section inférieure (106) du côté tourné vers le fond (14) et une section supérieure (107) reliée à la section inférieure (106) et s'étendant inclinée vers la section inférieure (106) vers le fond (14), de telle sorte que le coude de fermeture (104) soit conçu à la manière d'une pince à ressort (108),
- **en ce que** le coude de fermeture (104) et l'ouverture de couvercle correspondante (105) sont conçus de telle sorte que, lorsque le couvercle (103) et la partie intermédiaire sont déplacés l'un vers l'autre, le coude de fermeture (104) soit conduit à travers l'ouverture de couvercle (105) et se verrouille dans l'ouverture de couvercle (105).

3. Dispositif de chauffage selon la revendication 1 ou 2,
**caractérisé**
**en ce que** le couvercle (103), du côté tourné vers la partie intermédiaire (101), comprend au moins une bosse en saillie (109) qui presse la partie intermédiaire (101) vers le fond (14).

4. Dispositif de chauffage selon l'une quelconque des revendications 1 à 3, **caractérisé**
- **en ce que** la partie intermédiaire (101) et le couvercle (103) comportent des ouvertures de fixation correspondantes (110),
- **en ce qu'**une vis commune (111) est conduite à travers les ouvertures de fixation correspondantes (110) et vissée dans le fond (14), de telle sorte qu'une tête de vis (112) de la vis (111) repose sur le couvercle (103 ) et presse le couvercle (103) et la partie intermédiaire (101) vers le fond (14).

5. Dispositif de chauffage selon la revendication 4,
**caractérisé**
- **en ce que** le fond (14) pour au moins une vis (111) comprend un collier correspondant (113) qui fait saillie vers la partie intermédiaire (101) et dans lequel la vis (111) est agencée,
- **en ce que** la partie intermédiaire (101) pour le collier (113) comprend une ouverture de collier correspondante (114), par laquelle le collier correspondant (113) est conduit,
- **en ce que** la partie intermédiaire (101) comprend un coude à vis (115) qui fait saillie vers le couvercle (103) et comprend l'ouverture de fixation (110a) correspondant à la vis (111),
- **en ce que** le coude à vis (115) repose sur le côté du collier (113) opposé au fond (14).

6. Dispositif de chauffage selon la revendication 5,
**caractérisé**
**en ce que** le collier (113) comprend un filetage interne (116) dans lequel la vis correspondante (111) est vissée.

7. Dispositif de chauffage selon l'une quelconque des revendications 1 à 6, **caractérisé**
**en ce que** la partie intermédiaire (101) et le couvercle (103) sont agencés à l'intérieur du volume de commande (13).

8. Dispositif de chauffage selon la revendication 7,
**caractérisé**
- **en ce que** chaque module de chauffage (3) comprend au moins une fiche électrique (35) qui fait saillie à partir d'une face avant longitudinale (36) du module de chauffage (3) et qui est connectée à l'électronique de puissance,
- **en ce que** le couvercle (103) recouvre chaque face avant (36),
- **en ce que** le couvercle (103) de chaque fiche (35) comprend une ouverture de fiche correspondante (117), par laquelle la fiche correspondante (35) est conduite.

9. Dispositif de chauffage selon l'une quelconque des revendications 1 à 8, **caractérisé**
**en ce que** la partie intermédiaire (101) pour chaque coque externe (7) comprend des éléments de ressort correspondants (118) qui font saillie à partir de l'ouverture d'agencement correspondante (102) et reposent sur la coque externe correspondante (7) et sont chargés mécaniquement contre la coque externe (7).

10. Dispositif de chauffage selon la revendication 9,
**caractérisé**
**en ce qu'**au moins un des éléments de ressort (118) est revêtu d'un matériau résistant au frottement et conducteur, en particulier d'argent, sur son côté orienté vers la coque externe correspondante (7).

11. Dispositif de chauffage selon l'une quelconque des revendications 1 à 10, **caractérisé**
**en ce que** la partie intermédiaire (101) et/ou le couvercle (103) sont une pièce monobloc.

12. Dispositif de chauffage selon l'une quelconque des revendications 1 à 11, **caractérisé**
**en ce que** la partie intermédiaire (101) et/ou le couvercle (103) sont une pièce en tôle.

13. Dispositif de chauffage selon l'une quelconque des revendications 1 à 12, **caractérisé**
**en ce que** le couvercle (103) est électro-isolant.

14. Procédé de fabrication d'un dispositif de chauffage (1) selon l'une quelconque des revendications 1 à 13,
- dans lequel les modules de chauffage (3) sont conduits à travers le fond (14),
- dans lequel la partie intermédiaire (101) est préassemblée sur le couvercle (103),
- dans lequel le couvercle (103) conjointement avec la partie intermédiaire (101) sont agencés sur le fond (14) et fixés au fond (14), de telle sorte que chaque coque externe (7) soit conduite par l'ouverture d'agencement correspondante (102).

15. Véhicule à moteur (34) équipé d'un dispositif de chauffage (1) selon l'une quelconque des revendications 1 à 13, dans lequel le boîtier de commande (9) est connecté électriquement à une masse électrique (32) du véhicule à moteur (34).
